(19) Europäisches Patentamt
European Patent Office
Office européen des brevets

(11) **EP 2 056 587 A1**

(12) **EUROPEAN PATENT APPLICATION**

(43) Date of publication:
06.05.2009 Bulletin 2009/19

(51) Int Cl.:
*H04N 5/14* (2006.01)    *H04N 7/26* (2006.01)

(21) Application number: 08006307.6

(22) Date of filing: 31.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 30.10.2007 US 927944

(71) Applicant: **Qualcomm Incorporated**
San Diego, CA 92121-1714 (US)

(72) Inventors:
• **Oguz, Seyfullah, Halit**
San Diego
CA 92121-1714 (US)

• **Rohatgi, Amit**
San Diego
CA 92121-1714 (US)
• **Bhamidipati, Phanikumar**
San Diego
CA 92121-1714 (US)
• **Liu, Fang**
San Diego
CA 92121-1714 (US)

(74) Representative: **Heselberger, Johannes et al**
**Patent- und Rechtsanwälte**
**Bardehle - Pagenberg - Dost**
**Altenburg - Geissler**
**Galileiplatz 1**
**81679 München (DE)**

(54) **Detecting scene transitions in digital video sequences**

(57)    This disclosure describes techniques for detecting scene transitions in a digital video sequence. An encoding device may, for example, analyze a distribution of pixel values over a plurality of frames to detect locations at which the scene transitions occur. In particular, the encoding device analyzes the distribution of pixel locations having values in a mid-range of possible pixel values to identify locations in the plurality of frames that experience a significant short-term increase in the number of pixel locations having mid-range pixel values. A significant short-term increase in the number of pixel locations with pixel values in the mid-range of possible pixel values is indicative of a soft transition. In this manner, occurrences of gradual scene transitions are detected by identifying locations within the plurality of frames that have significant short-term increases in the number of pixel locations having mid-range pixel values.

FIG. 1

**Description**

**TECHNICAL FIELD**

This disclosure relates to techniques for detecting transitional effects in digital video sequences.

**BACKGROUND**

A digital video sequence may be described in terms of a sequence of images, also known as video frames. The sequence of images may present one or more different scenes that are edited together to form a video clip or other production. Each of the scenes comprises one or more related frames of video data. The frames of the video sequence are presented to a viewer in rapid succession to create the impression of movement.

During production of the video sequence, frames associated with one or more scenes are edited together to form the sequence. The location at which two scenes are edited together is referred to as a scene transition. In other words, a scene transition is the transition, in some way, from one scene into another scene. The scenes may be of the same subject taken from different angles or of two completely different subjects. A hard scene transition is a sudden transition from one scene to another scene. The hard scene transition may, for example, include a cut scene change or a flash frame. A soft scene transition, on the other hand, may be a gradual transition between two scenes. In other words, the soft transition may occur over a number of frames. Examples of soft scene transitions include cross-fades (also known as dissolves), fade-ins, fade-outs and the like.

A video encoding device may receive one or more digital video sequences and encode the sequences for transmission to one or more decoding devices or for storage until later transmission and decoding. A number of different video coding standards have been established for coding digital video sequences. The Moving Picture Experts Group (MPEG), for example, has developed a number of standards including MPEG-1 (Part 2), MPEG-2 (Part 2) and MPEG-4 (Part 2). Other examples include the International Telecommunication Union (ITU-T) H.261 and H.263 standards, and the emerging ITU-T H.264 standard, which is also set forth in MPEG-4 Part 10, entitled "Advanced Video Coding, AVC." These video coding standards generally support improved transmission and storage efficiency of video sequences by coding data in a compressed manner. Compression reduces the overall amount of data that needs to be transmitted or stored for effective transmission or storage of video frames. Video coding is used in many contexts, including video streaming, video camcorder, personal video recorder (PVR), digital video recorder (DVR), video telephony (VT), video conferencing, digital video distribution on video CD (VCD) and digital versatile/video disc (DVD), and video broadcast applications, over both wired and wireless transmission media and video storage applications on both magnetic and optical storage media.

The MPEG-1, MPEG-2, MPEG-4, ITU-T H.261, ITU-T H.263, and ITU-T H.264 standards support video coding techniques that utilize similarities between successive video frames, referred to as temporal or inter-frame correlation, to provide inter-frame compression. These standards also support video coding techniques that utilize similarities within individual video frames, referred to as spatial or intra-frame correlation, to provide intra-frame compression. The inter-frame compression techniques exploit data redundancy across adjacent or closely spaced video frames by converting pixel-based representations of frames to pixel-block-based translational motion representations. Video frames coded using inter-frame techniques are often referred to as P ("predicted") frames or B ("bi-predictive") frames. Some frames, commonly referred to as I ("intra") frames, are coded using spatial compression, which can be either non-predictive (i.e., based only on transform coding as in pre-H.264 standards) or predictive (i.e., based on both spatial prediction and transform coding as in H.264). In addition, some frames may include a combination of both intra- and inter-coded blocks. These encoding standards provide highly efficient coding that is well suited to wireless video broadcasting applications.

Determination of the type of coding technique to use for encoding a candidate frame is important for coding efficiency. As the video sequence changes its statistical nature over time, the encoding device should adapt the type of coding technique used for encoding the frames to exploit the available redundancy to the fullest extent possible for the most efficient compression. In general, an encoding device adaptively determines the type of coding technique to use for coding the current frame based on the content of surrounding frames and identification of scene transitions. To this end, the encoding device may attempt to identify the locations of such scene transitions.

**SUMMARY**

In one aspect, a method for processing digital video data comprises analyzing a distribution of pixel values over a plurality of frames of a sequence of the digital video data and detecting a scene transition within the sequence when the distribution of pixel values exhibits a short-term increase in a number of pixel locations having pixel values in a mid-range of possible pixel values by at least a predetermined amount.

In another aspect, an apparatus for processing digital video data comprises a pre-processor for receiving a plurality of frames. The pre-processor includes a transition detection module that analyzes a distribution of pixel values over a plurality of frames of a sequence of the digital video data and detects a scene transition within the sequence when the distribution of pixel values exhibits a short-term increase in a number of pixel locations having pixel values in a mid-range of possible pixel values by at least a predetermined amount.

In another aspect, an apparatus for processing digital video data comprises means for analyzing a distribution of pixel values over a plurality of frames of a sequence of the digital video data and means for detecting a scene transition within the sequence when the distribution of pixel values exhibits a short-term increase in a number of pixel locations having pixel values in a mid-range of possible pixel values by at least a predetermined amount.

In another aspect, a computer-program product for processing digital video data comprises a computer readable medium having instructions thereon. The instructions include code for analyzing a distribution of pixel values over a plurality of frames of a sequence of the digital video data and code for detecting a scene transition within the sequence when the distribution of pixel values exhibits a short-term increase in a number of pixel locations having pixel values in a mid-range of possible pixel values by at least a predetermined amount.

In another aspect, an integrated circuit device for processing digital video data comprising at least one processor that is configured to analyze a distribution of pixel intensity values over a plurality of frames of a sequence of the digital video data and detect a scene transition within the sequence when the distribution of pixel values exhibits a short-term increase in a number of pixel locations having pixel values in a mid-range of possible pixel values by at least a predetermined amount.

The techniques described in this disclosure may be implemented in hardware, software, firmware, or any combination thereof. If implemented in software, the software may be executed in a processor, which may refer to one or more processors, such as a general purpose microprocessor, application specific integrated circuit (ASIC), field programmable gate array (FPGA, also known as field programmable logic array, FPLA), or digital signal processor (DSP), or other equivalent integrated or discrete logic circuitry. The software that executes the techniques may be initially stored in a computer-readable medium and loaded and executed by a processor. Accordingly, this disclosure also contemplates computer-readable media comprising instructions to cause a processor to perform any of a variety of techniques as described in this disclosure. In some cases, the computer-readable medium may form part of a computer program product, which may be sold to manufacturers and/or used in a device. The computer program product may include the computer-readable medium, and in some cases, may also include packaging materials.

The details of one or more examples are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating a digital video coding system that employs scene transition detection techniques in accordance with this disclosure.

FIG. 2 is a block diagram of the encoding device of FIG. 1 in further detail.

FIG. 3 is a flow diagram illustrating exemplary operation of an encoding device utilizing the scene transition detection techniques of this disclosure.

FIG. 4 is a flow diagram illustrating exemplary operation of an encoding device detecting scene transitions within a section of a scene.

FIG. 5 is an exemplary processed image histogram data plot that represents the distribution of pixel values over a plurality of frames of a sequence.

FIG. 6 is another exemplary processed image histogram data plot that represents the distribution of pixel values over a plurality of frames of a sequence.

## DETAILED DESCRIPTION

This disclosure describes techniques for detecting scene transitions in digital video sequences. In particular, the techniques of this disclosure are particularly useful in detecting soft scene transitions in the video sequences. Soft scene transitions refer to gradual transitions between two scenes, which may include cross-fades (also referred to as dissolves), fade-ins, fade-outs and the like. Cross-fades or dissolves refer to transitional effects in which a first scene transitions directly into a second scene. Fade-ins refer to transitional effects in which a first scene comprises a uniform color, and said first scene fades into a second scene. For example, the fade-in may transition from a solid black screen into the second scene. Fade-outs refer to transitional effects in which the first scene fades to a uniform color, e.g., black.

A digital video sequence may be described in terms of a sequence of a plurality of video frames. Each of the video frames comprises a plurality of pixel locations that each correspond with a particular pixel value that defines a brightness and/or color of the pixel at the corresponding pixel location. In the YCbCr color space, for example, the pixel value may be a combination of a luminance (Y) value that represents the brightness (i.e., intensity) of the pixel and two chrominance values Cb and Cr that represent the blue and red dominated color components, respectively, of the pixel.

In accordance with the techniques described herein, an encoding device analyzes a distribution of pixel values over a plurality of frames to detect temporal locations (i.e., temporal intervals) at which soft scene transitions occur. In particular, the encoding device analyzes the distribution of pixel locations having values in a mid-range of possible pixel values to identify temporal locations in the plurality of frames that exhibit a short-term increase in a number of pixel locations having pixel values in a mid-range of possible pixel values by at least a predetermined amount. The short-term increase may, for example, be over approximately 2-30 frames. However, the short-term increase may be over a larger set of frames in some cases. A significant short-term increase in the number of pixel locations with pixel values in the mid-range of possible pixel values is indicative of a soft scene transition. This is especially true for scene transitions that have a large number of pixel locations that experience significant changes in pixel values during the transition as will be described in more detail below. In this manner, occurrences of gradual scene transitions are detected by identifying locations within the plurality of frames that have significant short-term increases in the number of pixel locations having mid-range pixel values.

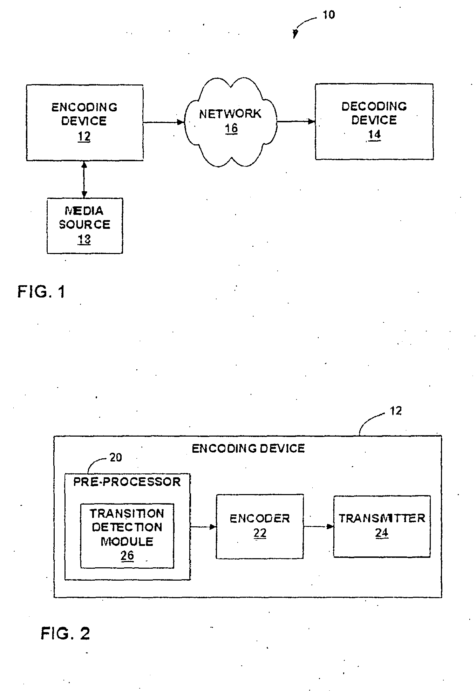

FIG. 1 is a block diagram illustrating a coded (or compressed) video communication system 10 that employs scene transition detection in accordance with the techniques described herein. Coding system 10 includes an encoding device 12 and a decoding device 14 connected by a network 16. Encoding device 12 obtains digital video sequences from at least one media source 18, encodes the digital video sequences and transmits the coded sequences over network 16 to decoding device 14. Encoding device 12 and decoding device 14 may comprise any wired or wireless devices, such as personal computers, mobile radiotelephones, servers, network appliances, computers integrated into vehicles, video gaming platforms, portable video game devices, computer workstations, computer kiosks, digital signage, mainframe computers, television set-top boxes, network telephones, personal digital assistants (PDAs), mobile media players, home media players, digital video projectors, or other types of electronic devices. As one example, encoding device 12 or decoding device 14 may be provided within a wireless communication device handset, such as a mobile telephone as described above, along with receive, transmit and other suitable components.

In certain aspects, media source 18 may comprise one or more video content providers that broadcast digital video sequences, e.g., via satellite. In other aspects, media source 18 may comprise a video capture device that captures the digital video sequence. In this case, the video capture device may be integrated within encoding device 12 or coupled to encoding device 12. Media source 18 may also be a memory or archive within encoding device 12 or coupled to encoding device 12.

The video sequences received from media source 18 may comprise live real-time or near real-time video and/or audio sequences to be coded and transmitted as a broadcast or on-demand content, or may comprise pre-recorded and stored video and/or audio sequences to be coded and transmitted as a broadcast or on-demand content. In some aspects, at least a portion of the video sequences may be computer-generated, such as in the case of gaming.

The digital video sequences received from media source 18 may be described in terms of a plurality of scenes that are edited together to form the video sequence. The scenes that are edited together may include scenes that include the same subject but viewed from different camera angles. For example, the scenes that are edited together may include a scene shot from a first camera angle and the same scene shot from a second camera angle. Alternatively, the scenes that are edited together may be scenes that include completely different subject matter. The location in the sequence at which two scenes are edited together is referred to as a scene transition. In other words, a scene transition is the transition, in some way, from one scene into another scene. As described above, the scene transition may be a hard transition that suddenly changes from one scene to another scene in a single frame or a soft transition that gradually changes between the two scenes over a number of frames.

Each of the scenes of the digital video sequence includes one or more frames that include the same subject matter. The subject matter of the frames need not be completely identical. For example, the frames may include the same subject matter located in a slightly different location to represent movement of an object. The frames may include additional subject matter, such as a new object that comes into the same background. In this manner, the scene is a composed of a sequence of related frames.

Encoding device 12 encodes each of the frames of the sequences received from media source 18 using one or more coding techniques. For example, encoding device 12 may encode one or more of the frames using intra-coding techniques. Frames encoded using intra-coding techniques, often referred to as intra ("I") frames, are coded without reference to other frames. Frames encoded using intra-coding, however, may use spatial prediction to compress the frames by taking advantage of redundancy in other video data located in the same frame. Encoding device 12 may also encode one or more of the frames using inter-coding techniques. Frames encoded using inter-coding techniques are coded with reference to at least a portion of one or more other frames, referred to herein as reference frames. The inter-coded frames may include one or more predicted ("P") frames, bi-predictive ("B") frames or a combination thereof. P frames are encoded with reference to at least one temporally prior frame while B frames are encoded with reference to at least one temporally future frame and at least one temporally prior frame. The temporally prior and/or temporally future frames are referred to as reference frames. In this manner, inter-coding techniques compress the frames by taking advantage of redundancy in video data across temporal dimension.

Encoding device 12 may be further configured to encode each of the frames of the sequence by partitioning each of the frames into a plurality of subsets of pixels, and separately encoding each of the subsets of pixels. These subsets of pixels may be referred to as blocks or macroblocks. Encoding device 12 may further sub-partition each block into two or more sub-blocks. As an example, a 16x16 block may comprise four 8x8 sub-blocks, or other sub-partition blocks. For example, the H.264 standard permits encoding of blocks with a variety of different sizes, e.g., 16x16, 16x8, 8x16, 8x8, 8x4, 4x8 and 4x4. Further, by extension, sub-partitions of the blocks may be made into sub-blocks of any size, e.g., 2x16, 16x2, 2x2, 4x16, 8x2 and so on. Blocks of size larger or smaller than sixteen rows or columns are also possible. As used herein, the term "block" may refer to either any size block or sub-block.

Encoding device 12 may adaptively determine the coding technique to use to encode a candidate frame within the sequence based at least in part on detection of scene transitions within the sequence. As described above, the scene transitions may include cross-fades (a.k.a. dissolves), fade-ins, fade-outs and the like. In accordance with the techniques described herein, encoding device 12 analyzes a distribution of pixel values over a plurality of frames to detect temporal locations (temporal intervals) within the sequence of frames where soft scene transitions occur. As will be described in further detail, the pixel values may represent brightness (i.e., luminance) of particular pixel locations. Alternatively, the pixel values may represent brightness and color of the particular pixel locations, e.g., an intensity vector of one or more spectral channels. Encoding device 12 may analyze, over the plurality of frames, the number of pixel locations in each of the frames having pixel values within a mid-range of possible pixel values. Encoding device 12 detects a soft scene transition when the number of pixel locations that have pixel values within the mid-range of possible pixel values exhibit a significant short-term increase. A significant short-term increase in the number of pixel locations having pixel values in the mid-range of possible pixel values is indicative of a soft transition. This is especially true for soft transitions in which a large number of pixel locations experience significant changes in intensity, in either the positive or negative direction, during the transition. In this manner, occurrences of gradual scene transitions are detected by detecting locations within the plurality of frames that exhibit a short-term increase in the number of pixel locations having mid-range pixel values. These short-term increases in mid-range pixel values may, for example, occur over a relatively few frames (e.g., over five frames) or over a larger number of frames (e.g., over 30 frames). However, the short-term increase may be over a larger set of frames in some cases.

Encoding device 12 determines the coding technique to use to encode the candidate frame within the sequence based at least in part on the detection of the one or more scene transitions within the sequence. Encoding device 12 may determine not to code the candidate frame as a P frame because the frame may include content from more than one scene. Instead, encoding device 12 may determine to code the candidate frame as a B frame using weighted bi-directional predictive coding to include content from both scenes. Accurately determining the type of coding technique to use for coding frames reduces required encoding bit-rates, enables efficient compression of the frames and better handling of scene transitions.

Encoding device 12 encodes the frames of the sequence and transmits the encoded frames over network 16 to decoding device 14. Network 16 may comprise one or more of a wired or wireless communication networks, including one or more of an Ethernet, Asynchronous Transfer Mode (ATM), telephone (e.g., POTS), cable, power-line, and fiber optic systems, and/or a wireless system comprising one or more of a code division multiple access (CDMA or CDMA2000) communication system, a frequency division multiple access (FDMA) system, an orthogonal frequency division multiple access (OFDMA) system, a time division multiple access (TDMA) system such as General packet Radio Service (GPRS/GSM)/enhanced data GSM environment (EDGE), a Terrestrial Trunked Radio (TETRA) mobile telephone system, a wideband code division multiple access (WCDMA) system, a high data rate (1xEV-DO or 1xEV-DO Gold Multicast) system, an IEEE 802.11 system, a Forward Link Only (FLO) system, a digital media broadcast (DMB) system, a digital video broadcasting-handheld (DVB-H) system, integrated services digital broadcast-terrestrial (ISDB-T) system and the like. Although described in the wireless context, the techniques of this disclosure may be used to compress data for transmission via a wired network.

Decoding device 14 receives the encoded data from encoding device 12 and decodes the coded frames. Decoding device 14 may further present the decoded video frame to a user via a display (not shown) that may be either integrated within decoding device 14 or provided as a discrete device coupled to decoding device 14 via a wired or wireless connection. Decoding device 14 may, for example, be implemented as part of a digital television, a wireless communication device, a gaming device, a portable digital assistant (PDA), a laptop computer or desktop computer, a digital music and video device, such as those sold under the trademark "iPod," or a radiotelephone such as cellular, satellite or terrestrial-based radiotelephone, or other wireless mobile terminal equipped for video and/or audio streaming, video telephony, or both. Decoding device 14 may be associated with a mobile or stationary device. In other aspects, decoding device 14 may comprise a wired device coupled to a wired network.

Encoding device 12 and decoding device 14 may operate according to a video compression standard, such as Moving Picture Experts Group (MPEG) MPEG-1 (Part 2), MPEG-2 (Part 2), MPEG-4 (Part 2), ITU-T H.261, ITU-T H.263, or ITU-T H.264, which corresponds to MPEG-4 Part 10, Advanced Video Coding (AVC). The H.264/MPEG-4 (AVC) standard was formulated by the ITU-T Video Coding Experts Group (VCEG) together with the ISO/IEC Moving Picture Experts Group (MPEG) as the product of a collective partnership known as the Joint Video Team (JVT). The H. 264 standard is described in ITU-T Recommendation H.264, Advanced video coding for generic audiovisual services, by the ITU-T Study Group, and dated 03/2005, which may be referred to herein as the H.264 standard or H.264 specification, or the H.264/AVC standard or specification.

In some aspects, for video broadcasting, the techniques described in this disclosure may be applied to enhanced H.264 video coding for delivering real-time video services in terrestrial mobile multimedia multicast (TM3) systems using the FLO Air Interface Specification, "Forward Link Only Air Interface Specification for Terrestrial Mobile Multimedia Multicast," to be published as Technical Standard TIA-1099 (the "FLO Specification"). The FLO Specification includes examples defining bitstream syntax and semantics and decoding processes suitable for the FLO Air Interface. Alternatively, video may be broadcasted according to other standards such as DVB-H (digital video broadcasting-handheld), ISDB-T (integrated services digital broadcast - terrestrial), or DMB (digital media broadcast). However, techniques described in this disclosure are not limited to any particular type of broadcast, multicast, unicast or point-to-point system. In the case of broadcast, video data provider 10 may broadcast several channels of video data to multiple receive devices.

FIG. 2 is a block diagram of encoding device 12 in further detail. Encoding device 12 includes a pre-processor 20, an encoder 22 and a transmitter 24. In some aspects, encoding module 12 may reside within a wireless communication device handset to encode images and/or video for transmission to another wireless communication device over a wireless network. Pre-processor 20 receives the frames of the sequence and analyzes the frames to assist encoder 22 in encoding the frames and analyzes the sequence of frames to identify temporal locations within the sequence of frames where scene transitions occur using the transition detection techniques described herein.

In particular, pre-processor 20 receives a plurality of frames of the sequence. Pre-processor 20 may receive the plurality of frames of the sequence from media source 18 (FIG. 1). In some cases, such as when media source 18 is a video content provider that broadcasts encoded digital video sequences, the frames may be coded frames. Encoding device 12 may, for example, include a decoder (not shown in FIG. 2) that decodes the frames of the sequence before providing the frames to pre-processor 20. The decoder may decode the frames to pixel domain for operations performed by pre-processor 20. In other cases, such as when media source 18 is a digital camcorder, the frames may be frames of raw pixel data.

For each of the frames, pre-processor 20 may classify pixel locations of the frames into one or more groups, sometimes referred to as bins, based on pixel values associated with the pixel locations. As used herein, the term "pixel value" refers to information that defines a brightness and/or color of the pixel at a pixel location. In the case of YCbCr color space, for example, the pixel value may be represented by a luminance (Y) value that represents the intensity of the pixel and two chrominance values Cb and Cr that represent the blue and red dominated color components, respectively. In this case, pre-processor 20 may classify the pixel locations based on the luminance values associated with the pixel locations. In some other cases, the pre-processor 20 may augment the luminance value with one or more chrominance channel values for classifying pixel locations based on pixel values. In the case of RGB color space, on the other hand, the pixel value may be represented by a red (R) channel value that represents the intensity of the red component of the pixel, a green (G) channel value that represents the intensity of the green component of the pixel and a blue (B) channel value that represents the intensity of the blue component of the pixel. In this case, pre-processor 20 may classify the pixel locations based on a vector representing one or more channels of the color space.

In some cases, each of the bins may correspond to a particular one of the possible pixel values. In the case of an 8-bit grayscale image, each bin may correspond to a value ranging from 0-255. In other words, there are 256 separate bins, each of which corresponds to only one value. Alternatively, the bins may correspond to a subset of the possible pixel values. For example, each of the bins may correspond to a particular number of consecutive pixel values, e.g., sixty-four bins that each correspond to four consecutive pixel values. Although described in terms of representing each pixel using 8-bit grayscale, more or less bits may be used to represent the pixels. Although in the example described above pre-processor 20 classifies pixel locations for each of the frames, pre-processor 20 may classify pixel locations into groups for only a subset of the frames. For example, pre-processor 20 may classify and/or analyze distributions of pixels for every other frame, every third frame, or some other portion of the frames.

Pre-processor 20 may generate a sequence i.e. a time series, of processed histogram data that represents the distribution of pixel locations having mid-range pixel values over a plurality of frames using groups/bins corresponding to the mid-range of possible pixel values. In one aspect, the processed histogram data series may show the variation of the number of pixel locations having pixel values within the mid-range of possible pixel values over the plurality of frames. In other words, the processed histogram data series may illustrate how the number of pixel locations having mid-range pixel values varies over time. In one example, pre-processor 20 may generate a processed histogram data series that represents the distribution of pixel locations with pixel values between 60 and 140, and more preferably between 80 and 120. This range, however, is only exemplary. Pre-processor 20 may generate processed histogram data series that represents the distribution of pixel locations with pixel values within other ranges.

A transition detection module 26 of pre-processor 20 analyzes the distribution of pixel values over the plurality of frames to detect locations of scene transitions within the sequence. In one aspect, transition detection module 26 analyzes the distribution of pixel values over the plurality of frames to identify temporal locations (time intervals) having a significant temporary increase in the number of pixel locations having values within the mid-range of possible pixel values. Such a short term increase is indicative of a transition. During a fade-in or fade-out, for example, a significant number of pixel locations may either considerably increase or decrease in brightness. In either case, the pixel values may transition through the mid-range from light to dark or dark to light. As an example, during a fade-in from a uniform black screen to a scene, a significant number of pixel locations increase in brightness as the pixel location change from black, i.e., a small luminance pixel value, to pixel values corresponding with increased brightness. During this transition from small luminance pixel values to mid or large luminance pixel values, a significant number of pixels transition through the mid-range luminance pixel values. Likewise, during a fade-out to a uniform black screen a significant number of pixels significantly decrease in brightness to the uniform black screen, transitioning through the mid-range luminance pixel values during the decrease in brightness. Therefore, one such characteristic of a transition is the observable increase in the number of pixel locations having values within the mid-range of the possible pixel values over a series of two or more consecutive frames situated at or near a scene transition. Although in the example described above, luminance (Y-channel) pixel values are used, other color channel pixel values may be used to supplement and aid in the detection of transitions, such as a pixel intensity vector that represents two or more color channel values, e.g., RGB color channel values. In each case, the luminance or intensity vector generally indicates the level of brightness of the pixels, or a combination of the brightness and color of the pixels.

This characteristic can be further illustrated based on the nature of a scene transition, as described below. A model equation that describes soft transitions is the following:

$$p(m+k,(x,y)) = \{ \alpha(k)\, p(m,(x,y)) \} + \{ (1 - \alpha(k))\, p(m+n,(x,y)) \} \qquad (1)$$

where $k \in \{0,1,...,n\}$, $(x,y) \in \{1,2,...,320\} \times \{1,2,...,240\}$ in the case of 320x240 resolution (x denotes the Cartesian Product of two sets), $p(i,(x,y))$ denotes the pixel intensity value in frame i (time instant i) and location $(x,y)$, m is the time instant immediately before the commencement of the cross-fade, n is the time interval length during which the cross-fade takes place and ends, $\alpha(k)$ is a non-increasing (e.g., decreasing) function of k with $\alpha(0) = 1$ and $\alpha(n) = 0$.

The entire set of pixel locations $L = \{(x,y) \mid (x,y) \in \{1,2,...,320\} \times \{1,2,...,240\}\}$ may be classified into one of the following three possible subsets:

1. $L_{\uparrow} = \{(x,y) \mid p(m,(x,y)) << p(m+n,(x,y))\}$ (considerably increasing pixel value locations)
2. $L_{\downarrow} = \{(x,y) \mid p(m,(x,y)) >> p(m+n,(x,y))\}$ (considerably decreasing pixel value locations)
3. $L_{\leftrightarrow} = \{(x,y) \mid p(m,(x,y)) \cong p(m+n,(x,y))\}$ (relatively stable pixel value locations)

where $p(m, (x,y))$ corresponds to a value of pixel located at $(x,y)$ at a time instant immediately before commencement of the cross-fade, and $p(m+n, (x,y))$ corresponds with the value of the pixel located at $(x,y)$ at a time instant at which the cross-fade ends. $(x,y)$ is the pixel location on the display. Subsets 1-3 meet the following two conditions:

$$L_{\uparrow} \cup L_{\downarrow} \cup L_{\leftrightarrow} = L$$

$$L_{\uparrow} \cap L_{\downarrow} = \varnothing, \quad L_{\downarrow} \cap L_{\leftrightarrow} = \varnothing, \quad L_{\uparrow} \cap L_{\leftrightarrow} = \varnothing.$$

The classification above may be achieved through upper bounding the absolute value of the difference $(p(m,(x,y)) - p(m+n,(x,y)))$ as follows:

$$| p(m,(x,y)) - p(m+n,(x,y)) | \leq T, \text{ where } T \text{ is a threshold} > 0.$$

By this it is meant that when the above inequality is satisfied for a pixel location $(x,y)$ then this pixel location will be assumed to belong to the subset $L_{\leftrightarrow}$ of relatively stable pixel value locations. Otherwise, i.e., if the above inequality is not satisfied for a pixel location $(x,y)$, this pixel location will be included in $L_{\downarrow}$ if '$p(m,(x,y)) > p(m+n,(x,y))$', or included

in $L_\uparrow$ if '$p(m,(x,y)) < p(m+n,(x,y))$'. The threshold T may be chosen to be a value in the range [20,...,40], for example 30.

When the number of the pixel locations that experience either a considerable increase or a considerable decrease in pixel intensity value is significant, e.g., $|L_\uparrow \cup L_\downarrow| = |L_\uparrow| + |L_\downarrow|$ corresponds to a sufficiently large fraction of $|L|$ or equivalently $|L_\uparrow \cup L_\downarrow|/|L| = (|L_\uparrow| + |L_\downarrow|)/|L| \geq T$, where T is a threshold, a sufficiently large number of pixel locations experience a sufficiently large swing in the pixel values as a result of the transition. In one example, the threshold T may be set to 0.30. The subset $L_\uparrow$ will induce a probability mass transfer from bins corresponding to small pixel values towards bins corresponding to larger pixel values. In a similar fashion, based on its definition, the set $L_\downarrow$ will induce a probability mass transfer from bins corresponding to large pixel values towards bins corresponding to smaller pixel values. The probability masses transferred in either direction will have to travel through bins associated with mid-range pixel values, briefly i.e. for a short-term, occupying these bins and causing a temporary probability mass build-up in this mid-range of bins. This short-term temporary probability mass build-up in the bins of mid-range pixel values may be representative of the occurrence of a soft transition. Transition detection module 26 may be configured to detect this probability mass build-up to identify the occurrence of a soft transition.

In other words, transition detection module 26 may detect a gradual scene transition when the number of pixel locations with pixel values within the monitored mid-range of pixel values experiences a significant temporary increase. For example, transition detection module 26 may detect a transition when the number of pixel locations with pixel values within the monitored mid-range exceeds a threshold value for a short-term period of time. The threshold value may be a statically configured value. For example, transition detection module 26 may detect a transition when the number of pixel locations with pixel values within the monitored mid-range exhibits an increase greater than or equal to 20% of the pixel locations, or greater than or equal to 30% of the pixel locations, or the like, over 30 or fewer frames. In the case of a resolution of 320 x 240, the threshold value may be equal to 30,000 corresponding to roughly 40% of the pixel locations. Alternatively, the threshold may be a statistically concluded dynamic value determined as a function of average bin counts within different ranges of bins over a consecutive number of frames. For example, transition detection module 26 may detect a transition when the number of pixel locations with pixel values within the monitored mid-range increases by 50% of the average mid-range bin count over the previous thirty frames.

The transition detection techniques described above analyze the distribution of pixel values over the entire frame for a plurality of frames. However, the techniques may be applied to sections of the frames instead of the entire frames. For example, pre-processor 20 may use the techniques described above to detect transitions within only a portion of the scene when no transition is detected for the entire scene. For example, during a newscast, the upper left portion of the scene may transition to a new scene that shows a picture of footage of whatever news event the anchorperson is discussing. In this case, pre-processor 20 may partition the scene into segments and analyze the pixel values of corresponding segments of a plurality of frames to detect the transition in the section of the scene. Thus, the section of the frame may include only a subset of the blocks of the frame.

Transition detection module 26 may provide encoder 22 with information regarding the locations of the detected transitions. Encoder 22 may determine a coding technique to use for encoding each of the frames or blocks of the frames based on at least the identified locations of the transitions. For example, encoder 22 may decide not to code the candidate frame as a P frame because the frame is part of a transition that includes content from more than one scene. Instead, encoding device 12 may determine to code the candidate frame as a B frame, e.g., using weighted bi-directional predictive coding, to include content from both scenes. Accurately determining the type of coding technique to use for coding frames reduces required encoding bit-rates, enables efficient compression of the frames and better handling of video transitions.

Encoder 22 encodes the frames or blocks in accordance with the selected encoding technique and transmits the encoded frames via transmitter 24. Transmitter 24 may include appropriate modem and driver hardware, software and/or firmware to transmit encoded video over network 16 (FIG. 1). In some cases, encoding device 12 may include reciprocal transmit and receive circuitry so that each may serve as both a transmit device and a receive device for encoded video and other information transmitted over network 16. In other words, the illustrated components of encoding device 12 may be integrated as part of an encoder/decoder (CODEC).

In certain aspects, encoding device 12 may encode, combine and transmit frames received over a period of time. In some video coding systems, for example, a plurality of frames of video data are grouped together into a segment of video data, sometimes referred to as a "superframe." As used herein, the term "superframe" refers to a group of frames collected over a time period or window to form a segment of data. In a coding system that utilizes FLO technology, the superframe may comprise a one-second segment of data, which may nominally have 30 frames. Pre-processor 20 may analyze the frames of the segment of data, e.g., the group of 30 frames in the case of FLO. In this case, pre-processor 20 may only detect scene transitions that occur substantially within one superframe. In other words, it may be difficult to detect transitions that occur over multiple segments of data. A superframe may, however, include any number of frames. The techniques may also be utilized for encoding, combining and transmitting other segments of data, such as for segments of data received over a different period of time, that may or may not be a fixed period of time, or for individual frames or sets of frames of data. In other words, superframes could be defined to cover larger or smaller time intervals than one-second periods, or even variable time intervals. Note that, throughout this disclosure, a particular segment of video data (e.g., similar to the concept of a superframe) refers to any chunk of video data of a particular size and/or duration.

The foregoing techniques may be implemented individually, or two or more of such techniques, or all of such techniques, may be implemented together in encoding device 12. The components in encoding device 12 are exemplary of those applicable to implement the techniques described herein. Encoding device 12, however, may include many other components, if desired, as well as fewer components that combine the functionality of one or more of the modules described above. The components in encoding device 12 may be implemented at least in part by a processor. The term processor may be used to refer to any of a variety of processing devices, including one or more processors, such as general purpose microprocessors, digital signal processors (DSPs), application specific integrated circuits (ASICs), field programmable gate arrays (FPGAs, also known as field programmable logic arrays, FPLAs), discrete logic, software, hardware, firmware, or any combinations thereof. Depiction of different features as modules is intended to highlight different functional aspects of encoding device 12 and does not necessarily imply that such modules must be realized by separate hardware or software components. Rather, functionality associated with one or more modules may be integrated within common or separate hardware or software components.

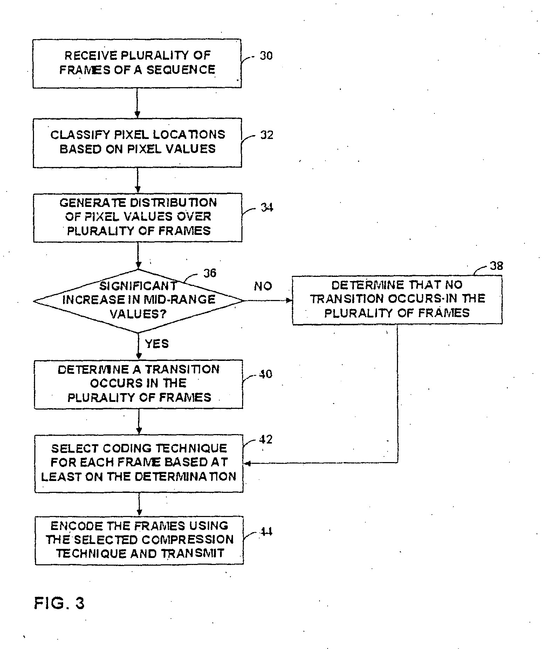

FIG. 3 is a flow diagram illustrating exemplary operation of an encoding device, such as encoding device 12 of FIG. 2, utilizing the transition detection techniques of this disclosure. Pre-processor 20 receives a plurality of frames of a digital video sequence from a media source 18 of FIG. 1 (30). Pre-processor 20 classifies pixel locations of each of the frames into one or more groups (e.g., bins) based on pixel values associated with the pixel locations (32). As described above, the pixel values may be scalar pixel values that represent a brightness and/or color of the pixels at the respective pixel locations. For example, the pixel values used for the techniques of this disclosure may be the luminance (Y-channel) pixel values. Alternatively, the pixel values may be an intensity vector representing two or more channels of pixel information. In some cases, this classification may be predetermined. In some other cases, the classification scheme may be dynamically changed to adapt to the varying nature of the video signal.

Pre-processor 20 may generate histogram data that represents the distribution of pixel values over a plurality of frames (34). In one aspect, the histogram may be processed to generate a sequence of probability values indicating the number of pixel locations having pixel values within a mid-range of possible pixel values over the plurality of frames. In other words, the histogram may be processed to illustrate how the probability of the pixel locations having mid-range pixel values varies over time.

Transition detection module 26 analyzes the distribution of pixel values over the plurality of frames to determine whether there is a significant temporary increase in the number of pixel locations having values within the mid-range of possible pixel values (36). Transition detection module 26 may analyze the distribution of pixel values over a superframe, e.g., over 30 frames. For example, transition detection module 26 may determine whether the number of pixel locations with pixel values within the monitored mid-range experiences a temporary increase which exceeds a threshold value (e.g., 30% of the pixel locations) over a series of frames. Transition detection module 26 may analyze every frame of the series, or only a portion of the frames of the series (e.g., every other frame). When transition detection module 26 determines there is not a significant temporary increase in the number of pixels having values within the mid-range of possible pixel values, transition detection module 26 determines there is no transition within the plurality of frames being analyzed (38).

When transition detection module 26 determines there is a significant temporary increase in the number of pixels having values within the mid-range of possible pixel values, e.g., the number of pixel locations having mid-range pixel values experiences a temporary increase which exceeds the threshold, transition detection module 26 determines there is a transition within the plurality of frames being analyzed (40). Encoding device 12 selects a coding technique to use for encoding each of the frames or blocks of the frames based at least on the determination of whether or not there is a transition in the plurality of frames (42). For example, encoding device 12 may determine to code the candidate frame as a B frame, e.g., using weighted bi-directional predictive coding, when a transition is detected. Coding the candidate frame as a B frame allows the coded frame to include subject matter of both a previous frame and a subsequent frame, thus allowing for a smoother transition between scenes. Alternatively, encoding device 12 may determine that the candidate frame should be coded as a P frame when a transition is not detected. Coding the frame as a P frame allows utilizing only previous references, thus reducing the complexity of encoding while still satisfactorily reducing the amount of bandwidth utilized by the coded frame. Encoder 22 encodes the frames or blocks in accordance with the selected encoding technique and transmits the encoded frames (44).

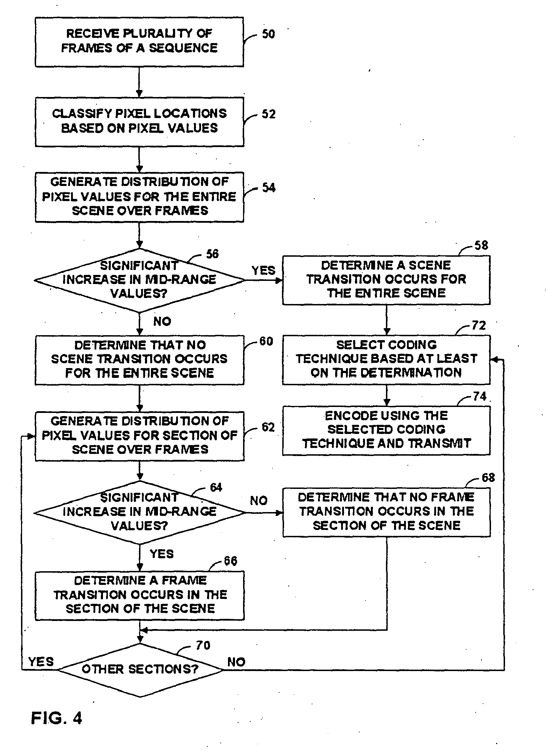

FIG. 4 is a flow diagram illustrating exemplary operation of an encoding device, such as encoding device 12 of FIG. 2, detecting a scene transition within a section of a scene. Pre-processor 20 receives a plurality of frames of a digital video sequence from a media source 18 of FIG. 1 (50). Pre-processor 20 classifies pixel locations of each of the frames into one or more groups (e.g., bins) based on pixel values associated with the pixel locations (52). Pre-processor 20 generates histogram data that represents the distribution of pixel values for the entire scene over a plurality of frames (54). In one aspect, the histogram may be processed to generate a sequence of probability values that indicates the number of pixel locations having pixel values within a mid-range of possible pixel values over the plurality of frames. In other words, the histogram data may be processed to illustrate how the number of pixel locations having mid-range pixel values varies over time.

Transition detection module 26 analyzes the distribution of pixel values over the plurality of frames to determine whether there is a significant temporary increase in the number of pixel locations having values within the mid-range of possible pixel values over the entire scene (56). When transition detection module 26 determines there is a significant temporary increase in the number of pixel locations having values within the mid-range of possible pixel values, transition detection module 26 determines that a scene transition has occurred for the entire scene (58). In other words, the scene transition is a transition of the entire scene from one scene to another.

When transition detection module 26 determines there is not a significant temporary increase in the number of pixels having values within the mid-range of possible pixel values, transition detection module 26 determines there is no transition of the entire scene within the frames (60). Pre-processor 20 generates histogram data that represents the distribution of pixel values for a section of the scene over a plurality of frames (62). In one aspect, the section of the scene may correspond to one or more neighboring blocks of the frame. For example, the section of the scene may be blocks of the frames that correspond to a corner of the frames.

Transition detection module 26 analyzes the distribution of pixel values for the section of the scene to determine whether there is a significant temporary increase in the number of pixel locations having values within the mid-range of possible pixel values over the section of the scene (64). When transition detection module 26 determines there is a significant temporary increase in the number of pixel locations having values within the mid-range of possible pixel values (e.g., the number of pixel locations having mid-range values experiences a temporary increase exceeding 30% of the number of all pixel locations), transition detection module 26 determines a scene transition occurs in the section of the scene (66). In other words, the scene transition is a transition of only a portion of the scene of the frames.

When transition detection module 26 determines there is not a significant temporary increase in the number of pixels having values within the mid-range of possible pixel values, transition detection module 26 determines there is no scene transition in the section of the scene of the frames (68). Transition detection module 26 determines whether to analyze other sections of the scene (70). When there are additional sections of the scene to be analyzed, pre-processor 20 generates a histogram data set that represents the distribution of mid-range pixel values for the next section of the scene over the frames and analyzes the distribution.

When there are no more additional sections of the scene to be analyzed or an entire scene transition is detected, encoding device 12 selects a coding technique to use for encoding at least a portion of the frames or blocks based at least on the determination of whether or not there is a scene transition (72). Encoding device 12 may begin encoding some of the blocks of the frame while analyzing other blocks of the frame. Alternatively, encoding device 12 may wait until all the blocks of the frame are analyzed before coding any of the blocks of the frame. When an entire scene transition is detected, encoding device 12 may determine to code the candidate frame as a B frame, e.g., using weighted bi-directional predictive coding, when a transition is detected. When a scene transition only occurs in a section of the scene, encoding device 12 may determine the coding technique to use for only the blocks of the sections based on the detected transition. Encoder 22 encodes the frames or blocks in accordance with the selected encoding technique and transmits the encoded frames (74).

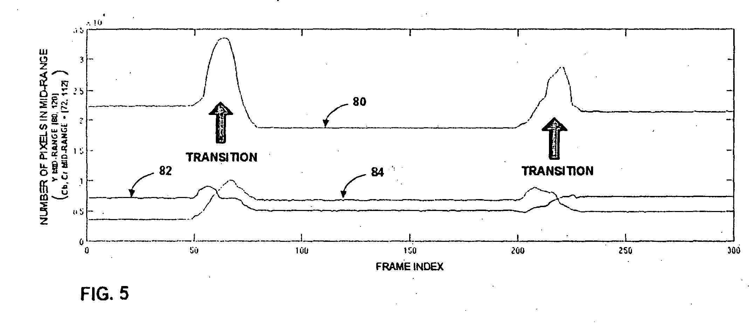

FIG. 5 is an exemplary processed histogram data plot that represents the number of pixels with values in the mid-range of pixel values over a plurality of frames of a sequence. The pixel value histogram illustrated in FIG. 5 is based on the distribution of pixel values in the YCbCr domain for a particular sequence. The x-axis represents the frame index of the plurality of frames of the sequence. The processed histogram data in FIG. 5 shows the distribution of pixel values over three hundred frames of the sequence. The y-axis represents a total sum of the number of pixels that have pixel values in the mid-range of possible pixel values. The mid-range of possible pixel values for the example illustrated in FIG. 5 is between pixel intensity values 80 and 120 for the Y-channel and between pixel color values 72 and 112 for the Cb and Cr channels. Other ranges of pixel values may, however, represent the mid-range of pixel values. The processed histogram data in FIG. 5 includes a Y-channel histogram partial sum sequence in the [80,120] range 80, a Cb-channel histogram partial sum sequence in the [72,112] range 82 and a Cr-channel histogram partial sum sequence in the [72,112] range 84 which represent the number of pixels with mid-range pixel values for the respective channel over the plurality of frames of the sequence.

As described in detail above, transition detection module 26 (FIG. 2) may analyze the Y-channel histogram partial sum sequence 80 to determine when the distribution of pixel intensity values within the mid-range experiences a significant temporary increase. In the example illustrated in FIG. 5, transition detection module 26 detects transitions at the locations around frame index 65 and around frame index 220. At these locations, Y-channel histogram partial sum sequence 80 exhibits a significant increase in the number of pixels having pixel values in the mid-range followed by a significant decrease in the number of pixels having pixel values in the mid-range. Such a pattern may be indicative of a cross-fade transition.

Although the transitions in the example shown in FIG. 5 are detected using only the Y-channel (i.e., intensity) histogram partial sum sequence 80, transition detection module 26 may also use a pixel value vector incorporating the intensity pixel value and one or more of the Cb and Cr channels to detect the transition. Moreover, when the pixel values are analyzed in the RGB color space, transition detection module 26 may use pixel values of a single color channel or a vector of two or more color channels.

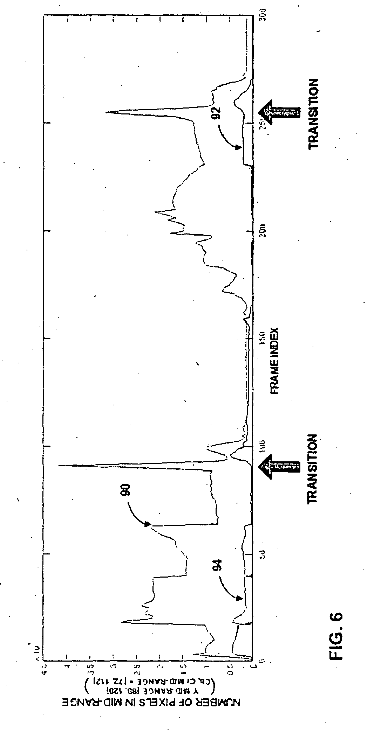

FIG. 6 is another exemplary processed histogram data plot that represents the number of pixels with values in the mid-range of pixel values over a plurality of frames of a sequence. The pixel value histogram illustrated in FIG. 6 is based on the distribution of pixel values in the YCbCr domain for a particular sequence. The x-axis represents the frame index of the plurality of frames of the sequence. The processed histogram data in FIG. 6 shows the distribution of pixel values over three hundred frames of the sequence. The y-axis represents a total sum of the number of pixels that have pixel values in the mid-range of possible pixel values. The mid-range of possible pixel values for the example illustrated in FIG. 6 is between pixel intensity values 80 and 120 for the Y-channel and between pixel color values 72 and 112 for the Cb and Cr channels. The processed histogram data in FIG. 6 includes a Y-channel histogram partial sum sequence in the [80,120] range 90, a Cb-channel histogram partial sum sequence in the [72,112] range 92 and a Cr-channel histogram partial sum sequence in the [72,112] range 94 which represent the number of pixels with mid-range pixel values for the respective channel over the plurality of frames of the sequence.

As described in detail above, transition detection module 26 (FIG. 2) may analyze the Y-channel histogram partial sum sequence 90 to determine when the distribution of pixel intensity values within the mid-range experiences a significant temporary increase. In the example illustrated in FIG. 6, transition detection module 26 detects transitions at the locations around frame index 90 and around frame index 255. At these locations, Y-channel histogram partial sum90 exhibits a significant increase in the number of pixels having pixel values in the mid-range followed by a significant decrease in the number of pixels having pixel values in the mid-range. Such a pattern may be indicative of a cross-fade transition.

Although the transitions in the example shown in FIG. 6 are detected using only the Y-channel (i.e., intensity) histogram partial sum sequence 90, transition detection module 26 may also use a pixel value vector incorporating more than one color channel to detect the transition. For example, when the pixel values are analyzed in the RGB color space, transition detection module 26 may use pixel values of a single color channel or a vector of two or more color channels. The pixel value vector, therefore, includes brightness information as well as color information.

Based on the teachings described herein, it should be apparent that an aspect disclosed herein may be implemented independently of any other aspects and that two or more of these aspects may be combined in various ways. The techniques described herein may be implemented in hardware, software, firmware, or any combination thereof. If implemented in hardware, the techniques may be realized using digital hardware, analog hardware or a combination thereof. If implemented in software, the techniques may be realized at least in part by one or more stored or transmitted instructions or a computer-program product that includes a computer readable medium on which one or more instructions or code is stored. The instructions or code associated with the computer-readable medium of the computer program product may be executed by a computer, e.g., by one or more processors, such as one or more digital signal processors (DSPs), general purpose microprocessors, application specific integrated circuits (ASICs), field programmable gate arrays (FPGAs, also known as field programmable logic arrays, FPLSa), or other equivalent integrated or discrete logic circuitry. Hence, the disclosure also contemplates any of a variety of integrated circuit devices that include circuitry to implement one or more of the techniques described in this disclosure. Such circuitry may be provided in a single integrated circuit chip or in multiple, interoperable integrated circuit chips.

By way of example, and not limitation, such computer-readable media can comprise RAM, such as synchronous dynamic random access memory (SDRAM), read-only memory (ROM), non-volatile random access memory (NVRAM), programmable read-only memory (PROM), electrically erasable programmable read-only memory (EEPROM), erasable programmable read-only memory (EPROM), FLASH memory, CD-ROM or other optical disk storage, magnetic disk storage or other magnetic storage devices, or any other tangible medium that can be used to carry or store desired program code in the form of instructions or data structures and that can be accessed by a computer.

A number of aspects and examples have been described. However, various modifications to these examples are possible, and the principles presented herein may be applied to other aspects as well. These and other aspects are within the scope of the following claims.

**Claims**

**1.** A method for processing digital video data comprising:

analyzing a distribution of pixel values over a plurality of frames of a sequence of the digital video data; and
detecting a scene transition within the sequence when the distribution of pixel values exhibits a short-term increase in a number of pixel locations having pixel values in a mid-range of possible pixel values by at least a predetermined amount.

2. The method of claim 1, wherein detecting the scene transition within the sequence comprises detecting the scene transition within the sequence when a percentage of pixel locations having pixel values in the mid-range of possible pixel values exceeds a particular percentage of an entire number of pixel locations of the frames for a short-term period of time.

3. The method of claim 1, further comprising:

classifying, for at least a subset of the frames of the plurality of frames, pixel locations of the subset of frames into groups based on pixel values associated with the pixel locations; and
generating the distribution of pixel values over the plurality of frames using a sum total of a number of pixel locations classified in the groups corresponding to the mid-range of possible pixel values, wherein the histogram data indicates a variation of the number of pixel locations having mid-range pixel values over the plurality of frames.

4. The method of claim 1, wherein:

analyzing the distribution of pixel values over the plurality of frames comprises analyzing the distribution of pixel values over the plurality of frames for a section of pixel locations within the frames; and
detecting the scene transition comprises detecting the scene transition within the section of pixel locations within the frames when the distribution of pixel values for the section exhibits a short-term increase in the number of pixel locations having pixel values in the mid-range of possible pixel values by at least a predetermined amount for a short-term period of time.

5. The method of claim 1, further comprising selecting a coding technique for encoding at least one of the plurality of frames based on at least the detected scene transition.

6. The method of claim 5, wherein selecting the coding technique comprises selecting a bi-directional coding technique for frames within the detected transition.

7. The method of claim 1, wherein analyzing the distribution of pixel values over the plurality of frames comprises analyzing a distribution of one of intensity values and a vector intensity values and color values over the plurality of frames.

8. The method of claim 1, wherein detecting the scene transition comprises detecting one of a cross-fade, a fade-in and a fade-out.

9. The method of claim 1, wherein detecting a scene transition within the sequence when the distribution of pixel values exhibits a short-term increase comprises detecting a scene transition within the sequence when the distribution of pixel values exhibits an increase in a number of pixel locations having pixel values in a mid-range of possible pixel values by at least a predetermined amount for thirty or fewer frames.

10. An apparatus for processing digital video data comprising:

a pre-processor for receiving a plurality of frames, wherein the pre-processor includes
a transition detection module that analyzes a distribution of pixel intensity values over a plurality of frames of a sequence of the digital video data and detects a scene transition within the sequence when the distribution of pixel values exhibits a short-term increase in a number of pixel locations having pixel values in a mid-range of possible pixel values by at least a predetermined amount.

11. The apparatus of claim 10, wherein the transition detection module detects the scene transition within the sequence when a percentage of pixel locations having pixel values in the mid-range of possible pixel values exceeds a particular percentage of an entire number of pixel locations of the frames.

12. The apparatus of claim 10, further comprising an encoder that selects a coding technique for encoding at least one of the plurality of frames based on at least the detected scene transition.

13. The apparatus of claim 10, wherein the transition detection module detects a scene transition within the sequence when the distribution of pixel values exhibits an increase in a number of pixel locations having pixel values in a mid-range of possible pixel values by at least a predetermined amount for thirty or fewer frames.

14. The apparatus of claim 10, wherein the apparatus comprises a wireless communication device handset, the handset further comprising:

>     an encoder that encodes the frames of the sequence; and
>     a transmitter that transmits the encoded frames.

15. A computer-program product for processing digital video data comprising a computer readable medium having instructions thereon, the instructions comprising:

>     code for analyzing a distribution of pixel values over a plurality of frames of a sequence of the digital video data; and
>     code for detecting a scene transition within the sequence when the distribution of pixel values exhibits a short-term increase in a number of pixel locations having pixel values in a mid-range of possible pixel values by at least a predetermined amount.

16. The computer-program product of claim 15, wherein code for detecting the scene transition within the sequence comprises code for detecting the scene transition within the sequence when a percentage of pixel locations having pixel values in the mid-range of possible pixel values exceeds a particular percentage of an entire number of pixel locations of the frames.

17. The computer-program product of claim 15, further comprising:

>     code for classifying, for at least a subset of the frames of the plurality of frames, pixel locations of the subset of frames into groups based on pixel values associated with the pixel locations; and
>     code for generating the distribution of pixel values over the plurality of frames using a sum total of a number of pixel locations classified in the groups corresponding to the mid-range of possible pixel values, wherein the histogram data indicates a variation of the number of pixel locations having mid-range pixel values over the plurality of frames.

18. The computer-program product of claim 15, wherein:

>     code for analyzing the distribution of pixel values over the plurality of frames comprises code for analyzing the distribution of pixel values over the plurality of frames for a section of pixel locations within the frames; and
>     code for detecting the scene transition comprises code for detecting the scene transition within the section of pixel locations within the frames when the distribution of pixel values for the section exhibits a short-term increase in the number of pixel locations having pixel values in the mid-range of possible pixel values by at least a predetermined amount.

19. The computer-program product of claim 15, further comprising code for selecting a coding technique for encoding at least one of the plurality of frames based on at least the detected scene transition.

20. The computer-program product of claim 19, wherein code for selecting the coding technique comprises code for selecting a bi-directional coding technique for frames within the detected transition.

21. The computer-program product of claim 15, wherein code for detecting a scene transition within the sequence when the distribution of pixel values exhibits a short-term increase comprises code for detecting a scene transition within the sequence when the distribution of pixel values exhibits an increase in a number of pixel locations having pixel values in a mid-range of possible pixel values by at least a predetermined amount for thirty or fewer frames.

22. An apparatus for processing digital video data comprising:

>     means for analyzing a distribution of pixel values over a plurality of frames of a sequence of the digital video data; and
>     means for detecting a scene transition within the sequence when the distribution of pixel values exhibits a short-term increase in a number of pixel locations having pixel values in a mid-range of possible pixel values by at least a predetermined amount.

23. The apparatus of claim 22, wherein the detecting means detects the scene transition within the sequence when a percentage of pixel locations having pixel values in the mid-range of possible pixel values exceeds a particular percentage of an entire number of pixel locations of the frames.

24. The apparatus of claim 22, wherein the detecting means detects a scene transition within the sequence when the distribution of pixel values exhibits an increase in a number of pixel locations having pixel values in a mid-range of possible pixel values by at least a predetermined amount for thirty or fewer frames.

25. An integrated circuit device for processing digital video data comprising at least one processor that is configured to:

analyze a distribution of pixel intensity values over a plurality of frames of a sequence of the digital video data; and detect a scene transition within the sequence when the distribution of pixel values exhibits a short-term increase in a number of pixel locations having pixel values in a mid-range of possible pixel values by at least a predetermined amount.

ENCODING DEVICE 12 → NETWORK 16 → DECODING DEVICE 14

MEDIA SOURCE 18

FIG. 1

ENCODING DEVICE 12

PRE-PROCESSOR 20

TRANSITION DETECTION MODULE 26 → ENCODER 22 → TRANSMITTER 24

FIG. 2

FIG. 3

FIG. 4

FIG. 5

FIG. 6

Europäisches
Patentamt
European
Patent Office
Office européen
des brevets

## EUROPEAN SEARCH REPORT

Application Number

EP 08 00 6307

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 745 190 A (IOKA MIKIHIRO [JP]) 28 April 1998 (1998-04-28)<br><br>* column 4, line 7 - column 7, line 19; figures 1-5 * | 1,2,7, 10,11, 15,16, 22,23 | INV. H04N5/14 H04N7/26 |
| X | WO 2007/078801 A (ANALOG DEVICES INC [US]; HOFFMAN MARC [US]; ZHANG WEI [US]; NING KE [U) 12 July 2007 (2007-07-12) | 1-5, 10-12, 14-19, 22,23 | |
| Y | * page 5, line 8 - page 9, line 19; figures 1-6 * | 6,8,9, 13,20, 21,24,25 | |
| X | JP 10 276435 A (SANYO ELECTRIC CO) 13 October 1998 (1998-10-13)<br><br>* the whole document * | 1,2,7, 10,11, 15,16, 22,23 | |
| Y | US 2007/160128 A1 (TIAN TAO [US] ET AL) 12 July 2007 (2007-07-12)<br><br>* paragraphs [0041], [0055], [0071], [0072], [0079]; figures 8,9 * | 6,8,9, 13,20, 21,24,25 | **TECHNICAL FIELDS SEARCHED (IPC)**<br><br>H04N |
| A | US 5 801 765 A (GOTOH YUKIE [JP] ET AL) 1 September 1998 (1998-09-01) | | |
| A | US 2003/185442 A1 (YANG YIBIN [US] ET AL) 2 October 2003 (2003-10-02) | | |

The present search report has been drawn up for all claims

| Place of search | Date of completion of the search | Examiner |
|---|---|---|
| The Hague | 4 February 2009 | Yvonnet, Joel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 00 6307

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2009

| Patent document cited in search report | | Publication date | Patent family member(s) | | Publication date |
|---|---|---|---|---|---|
| US 5745190 | A | 28-04-1998 | NONE | | |
| WO 2007078801 | A | 12-07-2007 | CN<br>EP | 101352029 A<br>1961210 A1 | 21-01-2009<br>27-08-2008 |
| JP 10276435 | A | 13-10-1998 | NONE | | |
| US 2007160128 | A1 | 12-07-2007 | NONE | | |
| US 5801765 | A | 01-09-1998 | JP | 9130732 A | 16-05-1997 |
| US 2003185442 | A1 | 02-10-2003 | AU<br>CN<br>EP<br>WO<br>JP<br>US | 2003207907 A1<br>1647503 A<br>1493270 A1<br>03084212 A1<br>2005522109 T<br>2006045334 A1 | 13-10-2003<br>27-07-2005<br>05-01-2005<br>09-10-2003<br>21-07-2005<br>02-03-2006 |

EPO FORM P0459

For more details about this annex : see Official Journal of the European Patent Office, No. 12/82